# DEMANDE DE BREVET EUROPEEN

(11) **EP 0 722 057 A1**
(43) Date de publication de la demande: **17.07.1996**
(21) Numéro de dépôt: 96400065.7
(22) Date de dépôt: 11.01.1996
(51) Int. Cl.: F16H 59/10, F16H 61/22

(54) **Sélecteur pour boîte de vitesses incorporant un mechanisme de verrouillage**

(30) Priorité: 11.01.1995 FR 9500254
(71) Demandeur: BOWDEN FRANCE S.A., F-60730 Cauvigny (FR)
(72) Inventeur: Jossart, Bruno, F-60140 Liancourt (FR); Bar, Jean-Philippe, F-60000 Beauvias (FR); Lerouge, Dominique, F-75012 Paris (FR)
(74) Mandataire: Schrimpf, Robert

(57) **Abrégé**

L'invention concerne un sélecteur (1') pour boîte de vitesses d'un véhicule, comprenant un levier de sélection (2) à déplacer manuellement et une grille de sélection propre à guider le déplacement du levier. Le sélecteur (1') comprend un verrou pivotant (6') conformé pour maintenir le levier de sélection (2) dans une position correspondant à l'arrêt du véhicule tant qu'une condition prédéterminée (telle qu'une pression sur la pédale de frein du véhicule) n'est pas remplie. Le sélecteur (1') comporte un organe de blocage mobile (21') propre à venir en prise avec le verrou (6') pour l'immobiliser.

## Description

La présente invention concerne un sélecteur pour boîte de vitesses d'un véhicule, et plus particulièrement un sélecteur du type comprenant un levier de sélection et un mécanisme de verrouillage pouvant agir sur le levier de sélection pour empêcher un déplacement de ce dernier tant qu'une condition prédéterminée n'est pas remplie.

L'invention s'adresse notamment aux véhicules équipés d'une boîte de vitesses automatique, commandée par un sélecteur comprenant un levier de sélection à déplacer manuellement et une grille de sélection propre à guider le mouvement du levier, cette grille définissant une position du levier correspondant à l'arrêt du véhicule et au moins une position du levier correspondant à la marche du véhicule.

On a proposé dans la publication EP-A-0 519 208 un sélecteur comprenant un verrou apte à pivoter d'une position de repos vers une position de verrouillage du levier de sélection, et un organe de blocage mobile propre à venir, dans une position de blocage en prise avec ledit verrou lorsque ce dernier est dans ladite position de verrouillage du levier de sélection pour interdire le pivotement du verrou et propre à autoriser, lorsqu'une condition prédéterminée est remplie, le pivotement de verrou vers sa position de repos pour libérer le levier de sélection.

Le verrou de ce sélecteur est une came dont le profil comporte plusieurs encoches dont les formes et les emplacements doivent être définis avec une grande précision pour correspondre aux positions du levier qui sont imposées par ailleurs et cette came, de fabrication onéreuse, ne peut convenir que pour une réalisation déterminée.

La présente invention a pour objet de proposer un nouveau sélecteur particulièrement simple, fiable, robuste et facile à adapter.

Ce sélecteur, du type comprenant un levier de sélection à déplacer manuellement et une grille de sélection définissant une position du levier correspondant à l'arrêt du véhicule et au moins une position du levier correspondant à la marche du véhicule, le sélecteur comprenant un verrou apte à pivoter d'une position de repos vers une position de verrouillage du levier de sélection, et un organe de blocage mobile propre à venir, dans une position de blocage, en prise avec ledit verrou lorsque ce dernier est dans ladite position de verrouillage du levier de sélection pour interdire le pivotement du verrou et propre à autoriser lorsqu'une condition prédéterminée est remplie, le pivotement du verrou vers sa position de repos pour libérer le levier de sélection, est caractérisé en ce que le verrou est conformé pour que son pivotement soit provoqué par l'appui du levier sur le verrou pendant le déplacement du levier et en ce que le passage du levier dans la position correspondant à l'arrêt du véhicule amène le verrou dans une position de verrouillage où il retient le levier dans ladite position correspondant à l'arrêt du véhicule.

Avantageusement, le sélecteur comporte un électro-aimant propre à déplacer, lorsqu'activé électriquement, ledit organe de blocage pour libérer le verrou. En variante, le déplacement de l'organe de blocage s'effectue au moyen d'une commande à câble.

Avantageusement, le sélecteur comporte en outre un mécanisme de libération à actionner manuellement pour déplacer ledit organe de blocage et libérer le verrou. Ainsi, on peut débloquer le levier de sélection en cas de panne d'alimentation électrique du véhicule (dans le cas où le sélecteur comporte un électro-aimant pour déplacer l'organe de blocage comme indiqué plus haut).

Dans une réalisation de l'invention, l'organe de blocage est rappelé dans sa position de blocage du verrou par des moyens de rappel élastiques. L'organe de blocage et le verrou sont avantageusement agencés de sorte que l'organe de blocage soit entraîné en déplacement par le pivotement du verrou depuis sa position de repos vers sa position de verrouillage, et de sorte que lorsque le verrou atteint au terme de son pivotement ladite position de verrouillage du levier de sélection, l'organe de blocage reprenne, sous l'action desdits moyens de rappel élastiques, sa position de blocage pour immobiliser le verrou. Le verrou présente avantageusement deux bords formant un angle entre eux, disposés de sorte que l'un des bords serve, dans ladite position de verrouillage du levier de sélection, de butée à ce dernier pour l'empêcher de quitter l'emplacement sur la grille de sélection correspondant à l'arrêt du véhicule, et de sorte que l'autre bord franchisse l'organe de blocage lors du pivotement du verrou vers sa position de verrouillage, et vienne en butée contre l'organe de blocage lorsque le verrou est en position de verrouillage du levier de sélection. Le verrou est avantageusement rappelé vers sa position de repos par des moyens de rappel élastiques. Avantageusement, l'organe de blocage est un coulisseau guidé à coulissement dans une direction parallèle à l'axe de rotation du verrou et le mécanisme de libération précité est un poussoir guidé à coulissement dans une direction parallèle à la direction de déplacement du coulisseau.

Dans une autre réalisation de l'invention, le sélecteur comporte en outre un organe de butée mobile, à relier par une commande à câble à un contacteur rotatif à clef (commandant le démarrage et la marche du moteur du véhicule), ledit organe de butée étant mobile entre une première position déterminée par la position de la clef dans le contacteur lors de son introduction ou de son retrait et une deuxième position déterminée par la position de la clef après une rotation dans le contacteur (la clef étant alors dans une position correspondant à la marche du moteur ou à la mise sous tension des circuits électriques du véhicule). L'organe de butée et l'organe de blocage sont conformés de manière à ce que l'organe de butée immobilise, lorsqu'il est dans ladite première position, l'organe de blocage en position de blocage du verrou et autorise, lorsqu'il est dans ladite deuxième position, un déplacement de l'organe de blocage hors de sa position de blocage du verrou pour libérer ce dernier.

L'organe de blocage est avantageusement conformé de manière à s'opposer, tant qu'il n'est pas dans sa position de blocage du verrou, à un déplacement de l'organe de butée de ladite deuxième position vers ladite première position. Le verrou est avantageusement conformé de manière à maintenir, lorsqu'il est hors de sa position de verrouillage du levier de sélection, l'organe de blocage hors de sa position de blocage dans une position dans laquelle il s'oppose à un déplacement de l'organe de butée de ladite deuxième position vers ladite première position. L'organe de blocage est avantageusement un coulisseau guidé à coulissement, parallèlement à l'axe de rotation du verrou, dans un passage traversant l'électro-aimant selon son axe, et le coullsseau présente une extrémité propre à venir en prise, dans ladite position de blocage du verrou, avec ce dernier pour l'immobiliser en rotation dans sa position de verrouillage du levier, l'autre extrémité du coulisseau étant propre, lorsque le coulisseau est maintenu par le verrou hors de sa position de blocage, à faire saillie sur le trajet de l'organe de butée entre lesdites première et deuxième positions, pour imposer au conducteur, avant le retrait de la clef de contact, de placer le levier de sélection dans la position correspondant à l'arrêt du véhicule.

D'autres caractéristiques et avantages de la présente invention apparaîtront à la lecture de la description détaillée qui va suivre, de deux exemples de réalisation non limitatifs de l'invention, et à l'examen du dessin annexé sur lequel :
- les figures 1 et 2 sont des vues en perspective, de dessous, selon deux angles de vue différents, d'un sélecteur conforme à un premier exemple de réalisation de l'invention,
- la figure 3 est une vue en perspective, de dessus, partielle, du sélecteur représenté sur les figures précédentes,
- la figure 4 est une vue de dessous du sélecteur représenté sur les figures précédentes,
- la figure 5 est une vue en perspective éclatée, partielle, du sélecteur représenté sur les figures précédentes,
- la figure 6 est une vue de dessus de la grille de sélection, représentée isolément,
- les figures 7A et 7B sont des vues partielles, de dessous, du sélecteur représenté sur les figures précédentes, montrant respectivement le verrou pivotant dans sa position de repos et en position de verrouillage du levier de sélection,
- les figures 8A et 8B sont des vues en perspective, partielles, d'un sélecteur conforme à un deuxième exemple de réalisation de l'invention, montrant respectivement le verrou pivotant dans des positions de verrouillage du levier de sélection et de repos,
- les figures 9A et 9B sont des vues de côté du sélecteur respectivement représenté sur les figures 8A et 8B,
- les figures 10A et 10B sont des vues de dessus du sélecteur respectivement représenté sur les figures 8A et 8B, dans la direction de la flèche X sur ces figures,
- la figure 11 est une vue en perspective du sélecteur conforme au deuxième exemple de réalisation de l'invention, et
- la figure 12 est une vue analogue à la figure 11, le verrou pivotant étant représenté dans sa position de verrouillage du levier de sélection.

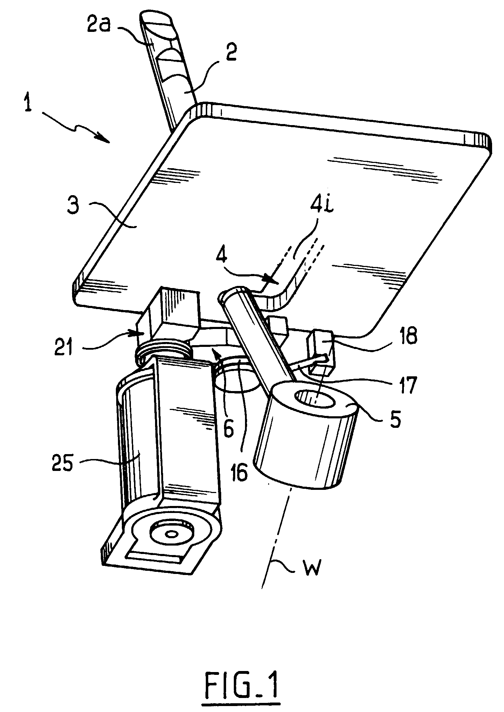

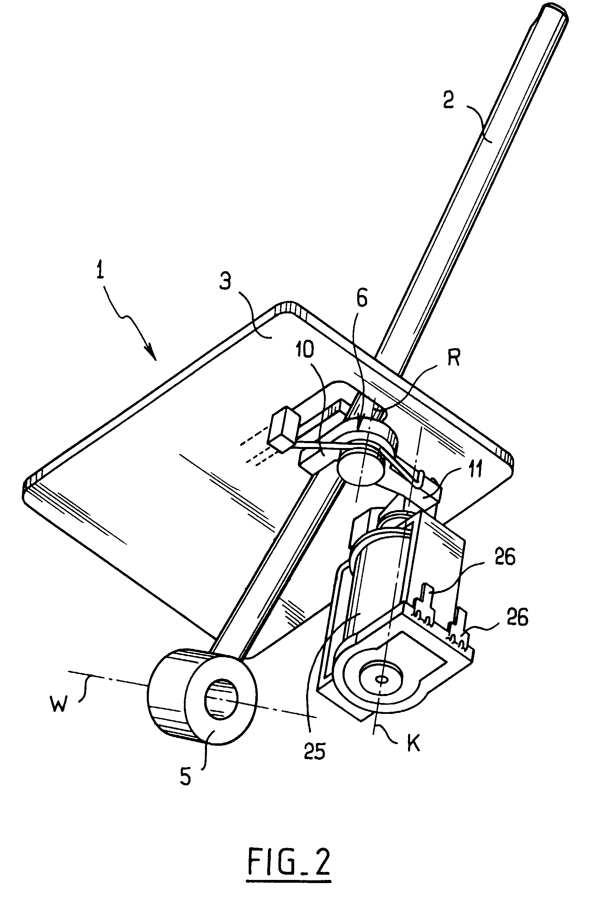

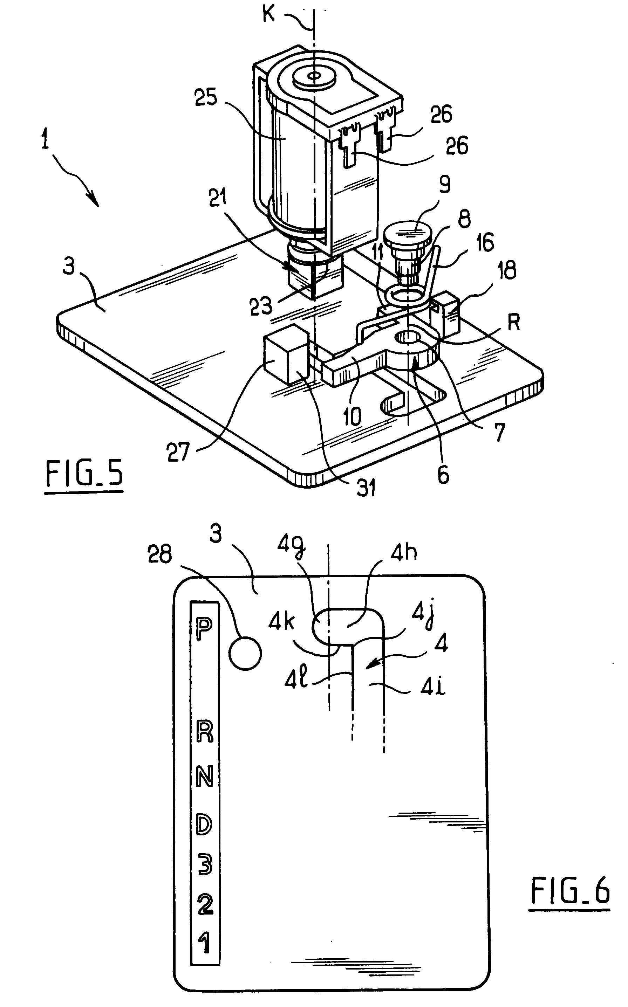

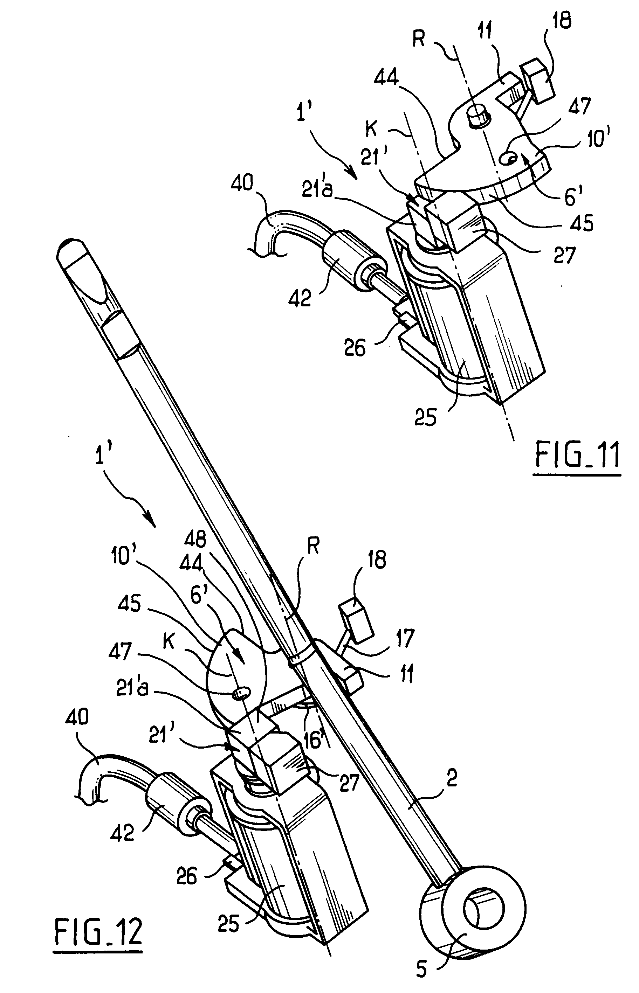

Les sélecteurs 1 et 1' respectivement conformes à un premier et à un deuxième exemples de réalisation de l'invention, représentés sur les figures 1 à 7B et 8A à 12, sont destinés à commander une boîte de vitesses automatique d'un véhicule automobile. Ils comportent un levier de sélection 2, déplaçable manuellement par le conducteur du véhicule, relié de façon connue en soi (par exemple par une tringlerie, par une commande à câble ou par toute autre liaison appropriée) à la boîte de vitesses pour commander le régime souhaité de fonctionnement de cette dernière. Le levier de sélection 2 est guidé en déplacement par une grille de sélection 3 représentée sur les figures 1, 2, 4, 5 et 6, présentant une région centrale généralement plane, traversée par le levier de sélection 2 et ajourée de manière à former un chemin de guidage 4. Plus particulièrement, comme représenté sur la figure 6, le chemin de guidage 4 définit des emplacements particuliers sur la grille, correspondant respectivement à l'engagement de la première vitesse de la boîte (le levier de sélection se trouve alors en face du repère "1"), de la deuxième vitesse (repère "2"), de la troisième vitesse (repère "3"), d'une position de marche normale du véhicule (repère "D"), d'une position de point mort (repère "N"), de marche arrière (repère "R") et d'une position de stationnement du véhicule (repère "P"). Le chemin de guidage 4 présente une extrémité coudée à angle droit, constituée par la réunion de deux portions rectilignes, dont une portion référencée 4i et une portion référencée 4h. La grille de sélection 3 définit un emplacement 4g à l'extrémité libre de la portion 4h. La largeur du chemin de guidage 4 est sensiblement égale au diamètre de la section transversale du levier de sélection 2 (mesurée à hauteur de la traversée de la grille de sélection 3).

Le levier de sélection 2 reçoit à son extrémité supérieure 2a un pommeau connu en lui-même et non représenté, et il est articulé à l'autre extrémité, par tout moyen connu de l'homme du métier, sur un support fixe non représenté, avec une possibilité de débattement angulaire autour de deux axes non parallèles. De préférence, il s'agit d'une articulation à deux axes sécants perpendiculaires entre eux, un manchon transversal 5 étant fixé à l'extrémité inférieure du levier de sélection 2 pour son montage à pivotement autour d'un tourillon s'étendant selon l'un des axes d'articulation précités, référencé W. On peut bien entendu, sans sortir du cadre de l'invention, relier le levier de sélection 2 au support fixe précité par une liaison à rotule, ou monter le levier de sélection en rotation autour d'un seul axe de rotation, le chemin de guidage 4 étant alors linéaire. Un mécanisme connu en lui-même et non représenté transforme la position angulaire du levier de sélection autour desdits axes d'articulation en une information (par exemple un déplacement précis d'une ou plusieurs tringles de liaison ou d'une ou plusieurs commandes à câble) permettant de commander un régime particulier de fonctionnement de la boîte de vitesses.

On va maintenant décrire plus particulièrement le sélecteur 1 en référence aux figures 1 à 7B.

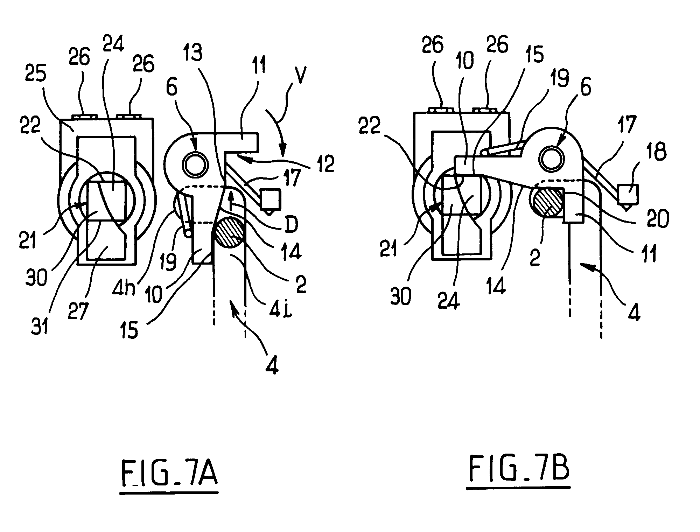

Conformément à l'invention, un verrou 6 est monté à pivotement, relativement à la grille de sélection 3, autour d'un axe de rotation R qui est dans l'exemple décrit sensiblement perpendiculaire au plan de la région centrale ajourée de la grille de sélection 3. Le verrou 6 comporte deux branches 10 et 11 se rejoignant autour d'un alésage 7 d'axe R. Un rivet 8 traverse l'alésage 7 et sert de pivot au verrou 6. Ce rivet 8 présente un corps cylindrique de révolution autour de l'axe R, de diamètre adapté à celui de l'alésage 7, prolongé à une extrémité par une tête épaulée 9 propre à retenir axialement le verrou 6 sur le corps cylindrique du rivet 8, et solidarisé à son extrémité opposée avec la grille de sélection 3, en un emplacement situé à proximité de la portion 4h du chemin de guidage 4. Le verrou 6 est délimité axialement, selon l'axe R, par deux faces frontales planes et parallèles, perpendiculaires à l'axe R, et radialement sur sa périphérie par une surface latérale de génératrice parallèle à l'axe R. Cette surface latérale forme, à la jonction des branches 10 et 11, un dièdre 12 d'angle au sommet égal à 90°, formé par la réunion d'un plan 13 et d'un plan 20. Le plan 13 du dièdre 12, situé sur la branche 10, se prolonge, en direction de l'extrémité libre de cette dernière, par un plan oblique 14, formant un angle d'une quinzaine de degrés avec le plan 13, et s'étendant sur toute la largeur de la portion 4h du chemin de guidage lorsque le verrou 6 est dans sa position de repos représentée sur la figure 7A. Le plan oblique 14 est prolongé par un plan 15 parallèle au plan 13, s'étendant jusqu'à l'extrémité libre de la branche 10. L'arête formée par l'intersection des plans 14 et 15 coïncide, lorsque le verrou est dans sa position de repos, avec le sommet d'un angle saillant 4j formé à la jonction de bords 4k et 41 de la grille de sélection 3 (bordant respectivement les portions rectilignes 4h et 4i, comme montré plus particulièrement sur la figure 6). Le déplacement du levier de sélection 2 dans la portion 4i du chemin de guidage 4, en direction du coude réunissant les portions 4h et 4i, provoque, par appui du levier de sélection 2 sur le bord de la branche 10 défini par le plan oblique 14, une rotation du verrou 6 dans le sens de la flèche V. Après passage du coude réunissant les portions 4h et 4i, le déplacement du levier de sélection 2 dans la portion 4h du chemin de guidage 4, en direction de l'emplacement 4g, provoque une continuation du pivotement du verrou 6 dans le sens de la flèche V, par appui du levier de sélection 2 sur le bord de la branche 10 défini par le plan 13, jusqu'à ce que le verrou 6 atteigne sa position de verrouillage du levier de sélection 2 représentée sur la figure 7B.

Un ressort de rappel 16 est enroulé sur la tête épaulée 9 du rivet 8, prend appui par une branche 17 contre une butée 18 solidaire de la grille de sélection 3, formant saillie vers le bas, et prend appui par une branche 19 sur le bord de la branche 10 du verrou 6 situé du côté opposé au bord défini par les plans 14 et 15, de manière à exercer sur le verrou 6 un couple tendant à le rappeler en rotation dans le sens contraire à la flèche V, vers la position de repos représentée sur la figure 7A.

En position de verrouillage, le bord de la branche 11 défini par le plan 20 du dièdre 12 bloque le levier de sélection 2 dans l'emplacement 4g du chemin de guidage 4, comme représenté sur la figure 7B.

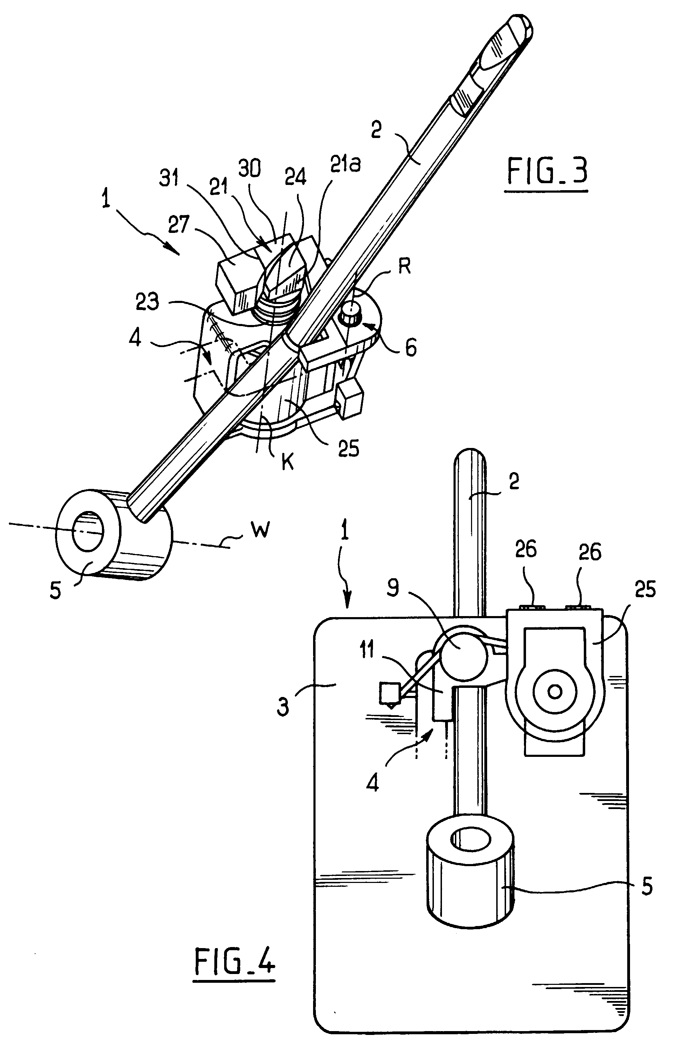

Le sélecteur 1 comporte, conformément à l'invention, un organe de blocage pour retenir le verrou 6 en position de verrouillage tant qu'une condition prédéterminée n'est pas remplie ; dans l'exemple de réalisation décrit, cette condition correspond au changement d'état d'un interrupteur lorsque le conducteur enfonce la pédale de frein du véhicule. Plus particulièrement, cet organe de blocage est constitué par un coulisseau 21 guidé à coulissement dans une direction K parallèle à l'axe de rotation R du verrou 6. Le coulisseau 21 présente à une extrémité axiale 21a une surface d'arrêt 22 s'étendant parallèlement à l'axe K, propre à venir au contact du bord de la branche 10 défini par le plan 15 lorsque le verrou 6 a atteint sa position de verrouillage, pour immobiliser ce dernier. Le coulisseau 21 est alors dans une position de blocage en rotation du verrou 6, et il est rappelé par des moyens de rappel élastiques dans cette position de blocage. Plus particulièrement, comme représenté sur la figure 3, ces moyens de rappel élastiques sont constitués dans l'exemple de réalisation décrit par un ressort hélicoïdal 23 coaxial à l'axe K.

Pour permettre le franchissement du coulisseau 21 par la branche 10 lors du pivotement du verrou 6 dans le sens de la flèche V vers sa position de verrouillage du levier de sélection 2, le coulisseau 21 présente à son extrémité axiale 21a, sur sa face frontale adjacente à la surface d'arrêt 22, une rampe 24 agencée pour transformer le déplacement angulaire de la branche 10 au contact de la rampe 24 en un enfoncement du coulisseau 21 à l'encontre du ressort de rappel 23. Une fois que le bord de la branche 10 défini par le plan 15 a franchi le coulisseau 21, ce dernier remonte sous l'action du ressort de rappel 23 et bloque en place le verrou 6, par venue en contact de la surface d'arrêt 22 et du plan 15.

Le sélecteur 1 comporte un électro-aimant 25 pour déplacer le coulisseau 21 à l'encontre du ressort 23 et libérer le verrou 6 lorsque la condition prédéterminée mentionnée plus haut est remplie, c'est-à-dire, dans l'exemple décrit, lorsque le conducteur appuie sur la pédale de frein. L'interrupteur qui équipe celle-ci établit alors un passage de courant vers les bornes 26 de l'électro-aimant 25, ce qui provoque un déplacement du coulisseau 21 libérant le verrou 6. Le levier de sélection 2 qui n'est plus bloqué dans l'emplacement 4g du chemin de guidage peut être déplacé par le conducteur pour l'enclenchement d'un régime de fonctionnement de la boîte de vitesses correspondant à la marche du véhicule. L'électro-aimant 25 présente un passage le traversant selon l'axe K et le coulisseau 21 comporte un corps longitudinal guidé à coulissement dans ce passage. Ce corps longitudinal s'élargit à l'extrémité axiale 2 la pour former une tête élargie portant la surface d'arrêt 22 et la rampe 24. On notera que dans l'exemple décrit le ressort 23 est enroulé sur le corps longitudinal du coulisseau 21 et prend axialement appui, à une extrémité, sur un épaulement de la tête élargie du coulisseau 21 et, à l'autre extrémité, sur la face de l'électro-aimant 25 bordant l'ouverture du passage servant de guide au coulisseau 21.

Le sélecteur 1 comporte avantageusement un mécanisme de libération à actionner manuellement pour libérer le verrou 6 en cas d'absence de l'énergie électrique nécessaire à l'alimentation de l'électro-aimant 25, par exemple si la batterie du véhicule est déchargée.

Ce mécanisme de libération comporte un poussoir non représenté, présentant une extrémité axiale externe formant normalement saillie, lorsque le coulisseau 21 est dans sa position de blocage du verrou 6, sur la grille de sélection 3 à la faveur d'un perçage 28 d'axe parallèle aux axes R et K. Le poussoir est guidé à coulissement par le perçage 28 et prend appui, lorsqu'il est enfoncé, par son extrémité axiale interne, sur une surface frontale 30 de la tête élargie du coulisseau 21, perpendiculaire à l'axe K.

La tête élargie du coulisseau 21 se déplace au contact d'une butée 27 fixe, solidaire dans l'exemple décrit de la grille de sélection 3 ; cette butée 27 présente une surface plane 31 s'étendant parallèlement à l'axe K au contact d'une surface de la tête élargie du coulisseau 21, située du côté opposé à la surface d'arrêt 22, de manière à reprendre les efforts de cisaillement exercés sur le coulisseau 21 par le verrou 6 en cas de tentative de manoeuvre forcée du levier de sélection 2 lorsque le verrou 6 est immobilisé en pivotement par le coulisseau 21.

Le fonctionnement du sélecteur 1 est le suivant. On suppose pour commencer que le levier de sélection 2 est dans une position correspondant à la marche normale du véhicule. Le verrou 6 est alors dans sa position de repos représentée sur la figure 7A, et il y est maintenu par le ressort 16. Le coulisseau 21 est rappelé en butée de fin de course en déplacement par le ressort 23. Lorsque le conducteur a procédé au stationnement du véhicule et déplace le levier de sélection 2 dans le chemin de guidage 4 pour le placer dans la position correspondant à l'arrêt du véhicule, définie par l'emplacement 4g, le levier de sélection 2, en parcourant la portion 4i puis la portion 4h du chemin de guidage 4, provoque le pivotement du verrou 6 dans le sens de la flèche V, et le franchissement du coulisseau 21 par la branche 10. Au terme de sa rotation, le verrou 6 est retenu par la surface d'arrêt 22. Le levier de sélection 2 est alors bloqué dans l'emplacement 4g du chemin de guidage 4 par la branche 11. On notera que l'électro-aimant 25 n'est pas en prise directe avec le levier de sélection 2 ; plus particulièrement, compte tenu de la distance séparant le coulisseau 21 et l'axe de rotation R, supérieure à celle séparant ce dernier du levier de sélection 2, le coulisseau 21 bénéficie d'un effet de bras de levier dans son maintien du levier de sélection 2 dans l'emplacement 4g.

Pour libérer le verrou 6, et par suite autoriser le dégagement du levier de sélection 2, le conducteur doit appuyer sur la pédale de frein afin d'établir le contact électrique nécessaire à l'activation électrique de l'électro-aimant 25 provoquant l'effacement du coulisseau 21. En variante, il est possible au conducteur d'appuyer sur le poussoir traversant le perçage 28 de la grille de sélection 3 pour déplacer manuellement le coulisseau 21. Lorsque le verrou 6 est libéré, il tend à pivoter dans le sens inverse de la flèche V sous l'action du ressort de rappel 16. Un léger pivotement suffit à établir un contact entre la branche 10 et la rampe 24, qui maintient le coulisseau 21 enfoncé et rend possible la poursuite du pivotement en sens inverse de la flèche V, en direction de la position de repos du verrou 6, même si l'activation de l'électro-aimant 25 cesse ou si le conducteur relâche la pression exercée sur le poussoir du mécanisme de libération. Le pivotement de retour du verrou 6, favorisé par l'action du ressort 16, s'effectue lorsque le levier de sélection 2 est déplacé par le conducteur dans la portion 4h du chemin de guidage 4 puis dans la portion 41 en direction d'un emplacement sur la grille de sélection 3 correspondant à la marche du véhicule.

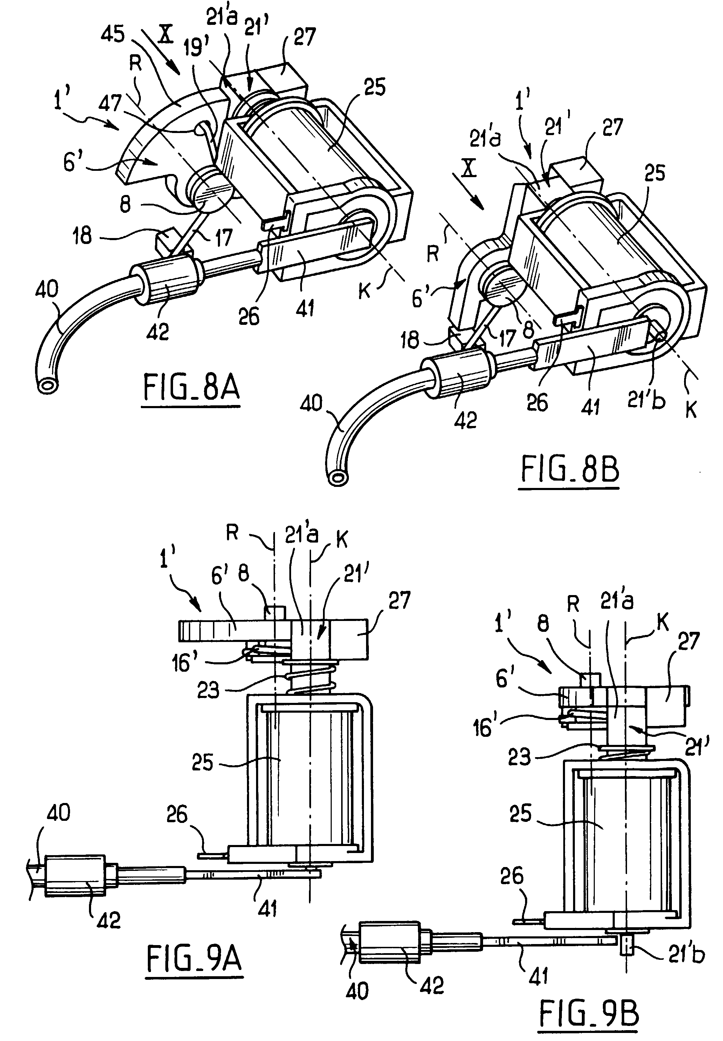

Le sélecteur 1' conforme au deuxième exemple de réalisation de l'invention va maintenant être décrit en référence aux figures 8A à 12. Des signes de référence identiques seront attribués aux éléments semblables à ceux de l'exemple de réalisation précédent, qui ne seront pas décrits à nouveau.

Le sélecteur 1' est relié par une commande à câble à un contacteur rotatif à clef commandant la marche et l'arrêt du moteur, connu en lui-même et non représenté. Cette commande à câble comporte une gaine flexible 40 et une âme guidée à coulissement dans cette gaine. L'âme est reliée à une extrémité à un mécanisme à came, transformant une rotation de la clef de contact en une translation de l'âme, et à l'autre extrémité à une plaque 41 formant organe de butée mobile comme cela va être précisé dans la suite. L'âme est guidée en coulissement à sa sortie de la gaine flexible 40 par un manchon de guidage 42, fixe. La plaque 41 est guidée en coulissement, selon un axe perpendiculaire à l'axe K, entre deux positions extrêmes déterminées par la position en rotation de la clef de contact dans le contacteur. Plus précisément, ce dernier est agencé de sorte que, lorsque la clef de contact est dans une position d'introduction ou de retrait, la plaque 41 est dans une première position représentée sur les figures 8A, 9A et 10A, et lorsque la clef de contact est dans une position de marche du moteur ou de mise sous tension des circuits électriques du véhicule, la plaque 41 est dans une deuxième position représentée sur les figures 8B, 9B et 10B.

Le sélecteur 1' est équipé d'un organe de blocage se présentant sous la forme d'un coulisseau 21'. Ce dernier présente à une extrémité axiale 21'a une tête élargie, se distinguant de celle du coulisseau 21 précédemment décrit par l'absence de rampe 24, remplacée par une partie pleine délimitée supérieurement par une surface plane 48, prolongeant la surface frontale 30 servant d'appui au poussoir du mécanisme de libération manuelle.

Le coulisseau 21' est apte à venir en prise, par sa tête élargie, avec un verrou 6' pivotant, pour immobiliser ce dernier en rotation et bloquer le levier de sélection 2 dans l'emplacement 4g de la grille de sélection 3.

Le coulisseau 21' présente un corps longitudinal dont la longueur est choisie de sorte que l'extrémité axiale 2l'b du coulisseau 21', opposée à l'extrémité axiale 21'a, fasse saillie hors de l'électro-aimant 25 lorsque la plaque 41 occupe ladite deuxième position et que le verrou 6' n'est pas bloqué en rotation par le coulisseau 21'.

Le verrou 6' diffère seulement du verrou 6 précédemment décrit par la géométrie de la branche propre à venir en butée avec le coulisseau 21', et référencée 10'. Cette branche 10' est délimitée d'un côté par un bord de profil identique à celui du verrou 6 décrit précédemment (défini par la réunion des plans 13, 14 et 15), et du côté opposé par un plan 44 perpendiculaire aux plans 13 et 15. Les plans 15 et 44 sont reliés par une surface 45 cylindrique de révolution autour de l'axe R. Le verrou 6' est rappelé en rotation dans une position de repos représentée sur les figures 8B, 9B et 10B par un ressort de rappel 16', enroulé sur le rivet 8 servant de pivot au verrou 6'. Le ressort 16' comporte une branche 17 venant appuyer contre une butée 18 solidaire de la grille de sélection 3, comme décrit précédemment, et une autre branche 19' présentant une extrémité recourbée 46, retenue par un perçage 47 ménagé sur la branche 10'.

Le fonctionnement du sélecteur 1' est le suivant.

On suppose pour commencer que la clef de contact est dans sa position d'introduction dans le contacteur et que le levier de sélection 2 se trouve dans l'emplacement 4g de la grille de sélection 3, correspondant à l'arrêt du véhicule. Tant que la clef de contact n'est pas tournée, la plaque 41 interdit l'enfoncement du coulisseau 21' en empêchant la sortie de l'extrémité axiale 21'b du coulisseau 21' hors de l'électro-aimant 25, comme illustré sur les figures 8A, 9B et 10A. Il n'est donc pas possible sans clef de contact de débloquer le levier de sélection 2, même en appuyant sur le poussoir du mécanisme de libération manuel.

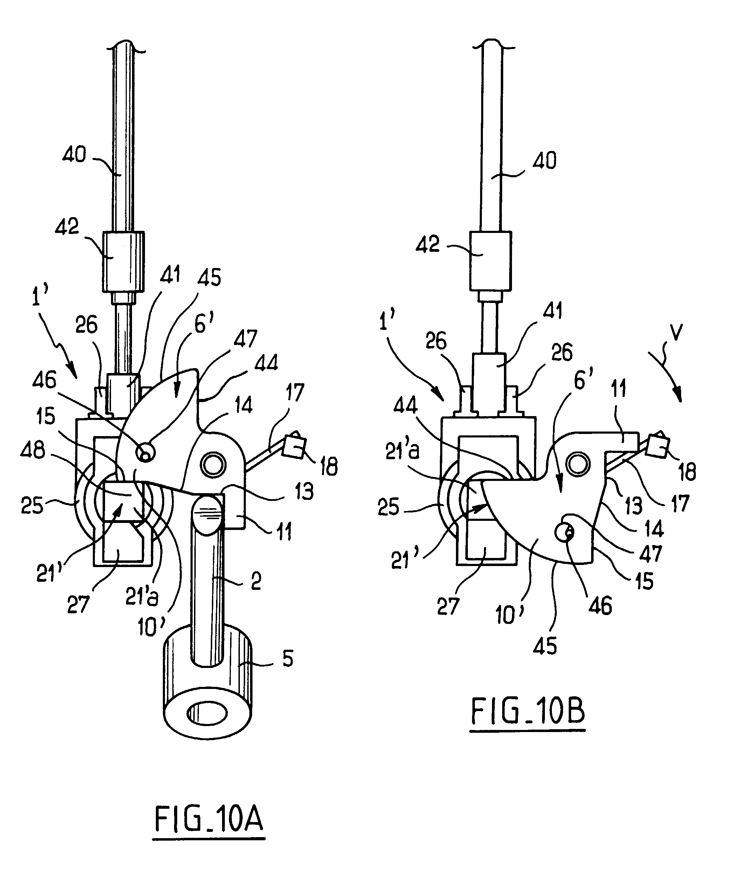

La rotation de la clef dans le contacteur provoque un déplacement de la plaque 41 vers la gauche sur la figure 9A, qui autorise une sortie de l'extrémité 2l'b et un enfoncement de la tête élargie du coulisseau 21'. Il devient alors possible de déplacer le coulisseau 21' pour libérer le verrou 6', soit en appuyant sur la pédale de frein du véhicule pour activer électriquement l'électro-aimant 25, soit en appuyant sur le poussoir du mécanisme de libération manuel. L'enfoncement de la tête élargie du coulisseau 21' libère le verrou 6', qui est entraîné en pivotement vers sa position de repos représentée sur la figure 10B lorsque le levier de sélection 2 est déplacé pour quitter l'emplacement 4g sur la grille de sélection 3. Ce pivotement est facilité par l'action du ressort de rappel 16'. Une fois le pivotement du verrou 6' commencé, la branche 10' maintient le coulisseau 21' enfoncé, donc l'extrémité axiale 21'b en saillie hors de l'électro-aimant 25 sur le trajet de la plaque 41, qui ne peut reprendre sa première position représentée sur les figures 8A, 9A et 10A. Il n'est donc pas possible de couper le contact et sortir la clef du contacteur tant que le verrou 6' n'a pas atteint la position de verrouillage du levier de sélection 2 qui permet la remontée du coulisseau 21', donc tant que le levier de sélection 2 n'est pas dans l'emplacement 4g.

L'invention n'est pas limitée aux exemples de réalisation qui viennent d'être décrits. On peut notamment remplacer l'électro-aimant 25 par une commande à câble reliée à la pédale de frein.

## Revendications

1. Sélecteur (1 ; 1') pour boîte de vitesses d'un véhicule, comprenant un levier de sélection (2) à déplacer manuellement et une grille de sélection (3) définissant une position (4g) du levier correspondant à l'arrêt du véhicule et au moins une position (4d) du levier correspondant à la marche du véhicule, le sélecteur (1 ; 1') comprenant un verrou (6 ; 6') apte à pivoter d'une position de repos (figure 7A ; figure 10B) vers une position de verrouillage (figure 7B ; figure 10A) du levier de sélection (2), et un organe de blocage mobile (21 ; 21') propre à venir, dans une position de blocage (figure 7B ; figure 10A), en prise avec ledit verrou (6 ;6') lorsque ce dernier est dans ladite position de verrouillage du levier de sélection (2) pour interdire le pivotement du verrou (6 ; 6') et propre à autoriser lorsqu'une condition prédéterminée est remplie, le pivotement du verrou (6 ; 6') vers sa position de repos (figure 7A ; figure 10B) pour libérer le levier de sélection (2), caractérisé en ce que le verrou (6,6') est conformé pour que son pivotement soit provoqué par l'appui du levier (2) sur le verrou pendant le déplacement du levier et en ce que le passage du levier dans sa position (4g) correspondant à l'arrêt du véhicule amène le verrou dans une position de verrouillage où il retient le levier dans ladite position (4g) correspondant à l'arrêt du véhicule.

2. Sélecteur selon la revendication 1, caractérisé en ce qu'il comporte un électro-aimant (25) propre à déplacer, lorsqu'activé électriquement, ledit organe de blocage pour libérer le verrou (6 ; 6').

3. Sélecteur selon l'une des revendications 1 et 2, caractérisé en ce qu'il comporte un mécanisme de libération à actionner manuellement pour déplacer ledit organe de blocage (21 ; 21') et libérer le verrou (6 ; 6').

4. Sélecteur selon l'une des revendications 1 à 3, caractérisé en ce que ledit organe de blocage (21 ; 21') est rappelé dans ladite position de blocage par des moyens de rappel élastiques (23).

5. Sélecteur selon la revendication 4, caractérisé en ce que l'organe de blocage (21) et le verrou (6) sont agencés de sorte que l'organe de blocage est entraîné en déplacement par le pivotement du verrou (6) depuis sa position de repos (figure 7A) vers sa position de verrouillage (figure 7B), pour permettre au verrou (6) de franchir ledit organe de blocage (21), et l'organe de blocage (21) et le verrou (6) sont agencés de sorte que lorsque le verrou (6) atteint ladite position de verrouillage (figure 7B) du levier de sélection (2) après franchissement de l'organe de blocage (21), ce dernier reprend, sous l'action desdits moyens de rappel élastiques (23), sa position de blocage pour immobiliser le verrou (6).

6. Sélecteur selon la revendication 5, caractérisé en ce que le verrou (6) présente deux bords (15 ; 20) formant un angle entre eux, disposés de sorte que l'un (20) des bords serve, dans ladite position de verrouillage, à empêcher le levier de sélection (2) de quitter la position correspondant à l'arrêt du véhicule (figure 7B), par butée du levier de sélection (2) sur ce bord, et de sorte que l'autre bord (15) franchisse l'organe de blocage (21) lors du pivotement du verrou (6) vers sa position de verrouillage (figure 7B), et vienne en butée contre une surface (22) de l'organe de blocage lorsque le verrou (6) est en position de verrouillage du levier de sélection (6).

7. Sélecteur selon l'une des revendications 1 à 6, caractérisé en ce que ledit verrou (6 ; 6') est rappelé vers sa position de repos (figure 7A ; figure 10B) par des moyens de rappel élastiques (16 ; 16').

8. Sélecteur selon la revendication 3 et l'une des revendications 4 à 7, caractérisé en ce que ledit organe de blocage est un coulisseau (21 ; 21') monté à coulissement dans une direction (K) parallèle à l'axe (R) de rotation du verrou (6 ; 6') et en ce que ledit mécanisme de libération est un poussoir guidé à coulissement dans une direction parallèle à la direction (K) de déplacement du coulisseau.

9. Sélecteur selon l'une des revendications 1 à 8, caractérisé en ce qu'il comporte en outre un organe de butée mobile (41), à relier par une commande à câble à un contacteur rotatif à clef, commandant le démarrage et la marche du moteur du véhicule ou la mise sous tension des circuits électriques du véhicule, ledit organe de butée étant mobile entre une première position déterminée par la position de la clef dans le contacteur lors de son introduction ou de son retrait et une deuxième position déterminée par la position de la clef après rotation et correspondant à la marche du moteur ou à la mise sous tension des circuits électriques du véhicule, ledit organe de butée mobile et l'organe de blocage étant conformés de manière à ce que l'organe de butée immobilise, lorsqu'il est dans ladite première position, l'organe de blocage en position de blocage du verrou (6') et autorise, lorsqu'il est dans ladite deuxième position, un déplacement de l'organe de blocage (21') hors de sa position de blocage pour libérer le verrou (6').

10. Sélecteur selon la revendication 9, caractérisé en ce que l'organe de blocage (21') est conformé de manière à s'opposer, tant qu'il n'est pas dans sa position de blocage du verrou (6'), à un déplacement de l'organe de butée de ladite deuxième position vers la première position.

11. Sélecteur selon la revendication 10, caractérisé en ce que le verrou (6') est conformé de manière à maintenir, hors de sa position de verrouillage du levier de sélection, l'organe de blocage hors de sa position de blocage, dans une position dans laquelle il s'oppose à un déplacement de l'organe de butée de ladite deuxième position vers la première position.

12. Sélecteur selon la revendication 11 et les revendications 2 et 4, caractérisé en ce que l'organe de blocage est un coulisseau (21') guidé à coulissement parallèlement à l'axe de rotation (R) du verrou (6'), dans un passage traversant l'électro-aimant (25) selon son axe, le coulisseau (21') présentant une extrémité (21'a) propre à venir en prise, dans ladite position de blocage, avec le verrou (6') pour immobiliser ce dernier en rotation dans sa position de verrouillage du levier de sélection, l'autre extrémité (21'b) du coulisseau (21') étant propre, lorsque le coulisseau (21') est hors de sa position de blocage, à faire saillie sur le trajet de l'organe de butée (41) entre lesdites première et deuxième positions.

13. Sélecteur selon l'une des revendications 8 et 12, caractérisé en ce qu'il comporte une butée fixe (27) propre à reprendre les efforts de cisaillement exercés par le verrou (6 ; 6') sur le coulisseau (21 ; 21').

14. Sélecteur selon l'une des revendications 1 à 13, caractérisé en ce que le levier de sélection (2) est articulé sur un support avec une possibilité de débattement angulaire autour de deux axes non parallèles, de préférence perpendiculaires et sécants.
